Europäisches Patentamt

European Patent Office

Office européen des brevets

(19)

(11) Numéro de publication: **0 418 141 A1**

# DEMANDE DE BREVET EUROPEEN

(21) Numéro de dépôt: **90402492.4**

(22) Date de dépôt: **11.09.90**

(51) Int. Cl.5: **G10K 11/34**, G01S 7/00, G01V 1/22

(30) Priorité: **15.09.89 FR 8912107**

(43) Date de publication de la demande:
**20.03.91 Bulletin 91/12**

(84) Etats contractants désignés:
**DE GB SE**

(71) Demandeur: **THOMSON-CSF**
**51, Esplanade du Général de Gaulle**
**F-92800 Puteaux(FR)**

(72) Inventeur: **Gulli, Christian**

**THOMSON-CSF, SCPI, Cédex 67**
**F-92045 Paris la Défense(FR)**
Inventeur: **Le Gall, Jean**
**THOMSON-CSF, SCPI, Cédex 67**
**F-92045 Paris la Défense(FR)**
Inventeur: **Grall, Georges**
**THOMSON-CSF, SCPI, Cédex 67**
**F-92045 Paris la Défense(FR)**

(74) Mandataire: **Desperrier, Jean-Louis et al**
**THOMSON-CSF SCPI**
**F-92045 PARIS LA DEFENSE CEDEX 67(FR)**

(54) **Procédé de formation de voies pour sonar, notamment pour sonar remorqué.**

(57) L'invention concerne les procédés de formation de voies pour sonar.

Elle consiste, après avoir échantillonné à une fréquence T = 1/4fo (fo fréquence de réception centrale du sonar) les signaux des hydrophones (1-N) du sonar et les avoir transposés en bande de base, à sous-échantillonner les signaux ainsi transposés avec une période $T_{SE}$ = kT (k entier) sensiblement égale à 1,25 B où B est la bande de fréquence de réception du sonar. Un premier ensemble de signaux est sous-échantillonné à des instants identiques pour former un secteur frontal (S1). Deux autres ensembles de signaux sont sous-échantillonnés avec des retards entre les signaux de deux hydrophones adjacents égaux à T, ce qui détermine deux secteurs latéraux (S2, S3) adjacents au secteur frontal. Ces signaux sous-échantillonnés sont ensuite transmis en série par le câble de remorquage (30) de l'antenne du sonar et sont traités (60) dans des circuits FFT qui permettent de former dans chaque secteur un ensemble de voies couvrant ce secteur.

Elle permet de diminuer considérablement le débit des données entre la partie du sonar remorquée et la partie du sonar située dans le bateau.

FIG.2

# PROCÉDÉ DE FORMATION DE VOIES POUR SONAR, NOTAMMENT POUR SONAR REMORQUÉ

La présente invention se rapporte aux procédés qui permettent de former des voies dans les sonars. Elle s'applique plus particulièrement aux sonars remorqués dans lesquels les données doivent transiter par le câble de remorquage, dont le débit est nécessairement limité.

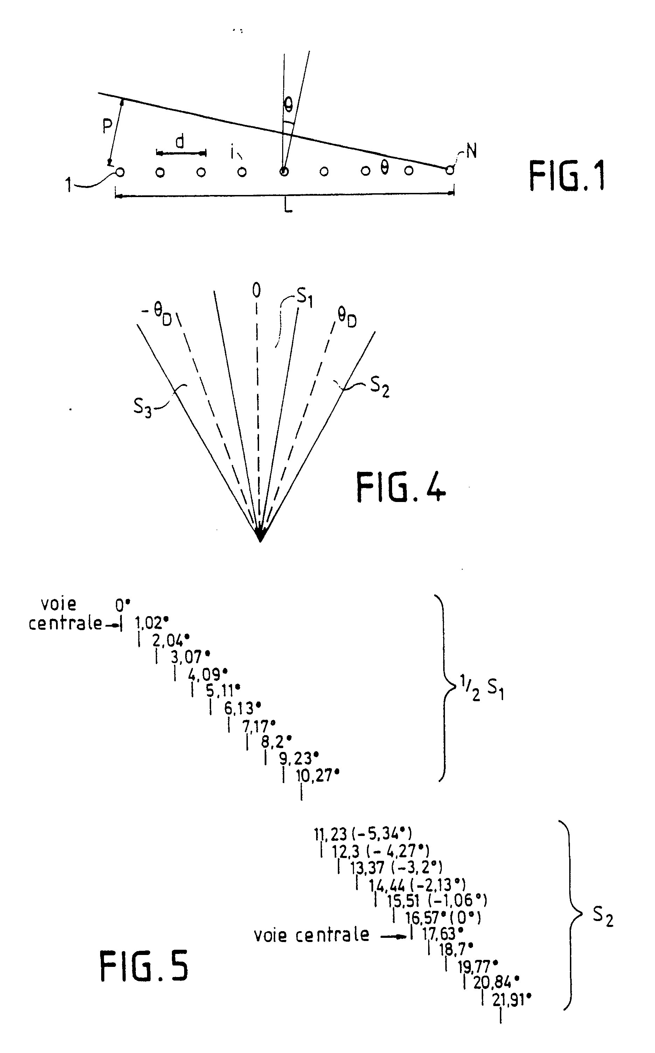

Comme représenté sur la figure 1, une antenne sonar simple comprend un certain nombre d'hydrophones 1 à N répartis avec un pas d sur segment de droite.

Les signaux reçus par ces hydrophones (plus généralement par ces capteurs) sont combinés à la fois pour obtenir un signal de réception plus fort que celui d'un hydrophone isolé et pour déterminer des indications sur la direction de la source émettant le signal reçu.

Si l'on additionne simplement les signaux de tous les hydrophones, on obtient un diagramme de directivité qui présente une direction de réception privilégiée perpendiculaire au segment de droite sur lequel sont alignés les hydrophones. Cette direction privilégiée est appelée une voie de réception.

Pour pouvoir surveiller un secteur plus large que celui déterminé par cette simple voie frontale, il est connu d'additionner les signaux des hydrophones avec un déphasage qui permet d'obtenir des voies dans des directions qui dépendent de ce déphasage.

En effet les signaux reçus d'une source située dans une direction $\theta$ par rapport à la normale à l'antenne présentent une différence de phase, à la fréquence f, qui est donnée pour un capteur i par rapport au capteur 1 situé à l'extrême gauche sur la figure par la formule :

$$\varphi_i = \frac{2\pi f}{c}(i-1)d \sin\theta \qquad (1)$$

Si donc on applique aux signaux des capteurs des déphasages, à une fréquence de fonctionnement fo donnée, pour un capteur i par la formule :

$$\varphi_e = \frac{2\pi fo}{c}(i-1)d \sin\theta_o \qquad (2)$$

on obtient un diagramme de directivité qui présente un maximum pour la direction $\theta_o$ par rapport à la normale à l'antenne. On a ainsi formé une voie dans cette direction $\theta_o$ et on peut former autant de voies que désirées, dans les limites précisées ci-dessous, en appliquant les déphasages adéquats.

Les signaux reçus sont rarement des fréquences pures, et lorsque f est différent de fo on constate une rotation de la direction de la voie déterminée par la formule :

$$\sin\theta = \frac{fo}{f}\sin\theta_o \qquad (3)$$

L'orientation de la voie permettant de déterminer la direction où se trouve la source du signal, on obtient ainsi une erreur sur cette direction. Cette erreur est plus ou moins tolérable, et une règle courante consiste à admettre qu'elle puisse atteindre une valeur égale à la moitié de la largeur du lobe à -3dB d'atténuation de la voie. Cette largeur $\theta_{-3}$ est donnée, c étant la vitesse de propagation des ondes sonores dans l'eau et L la longueur de l'antenne (égale à la distance entre les hydrophones extrêmes), par la formule :

$$2\sin\theta_{-3} = \frac{c}{fL} \qquad (4)$$

La bande de fréquence du signal reçu étant égale à B, le décalage de fréquence maximum est égal à B/2.

Pour une variation de fréquence $\delta f$, la rotation du lobe est obtenue en dérivant la formule (3) pour f = fo :

$$\delta(\sin\theta) = -\sin\theta_o\frac{\delta f}{fo} \qquad (5)$$

En faisant $\delta f = B/2$ et en égalant $\delta(\sin\theta)$ à sin $\theta_{-3}$, on obtient la condition fondamentale suivante :

$$\frac{L\ \sin\ \theta_o}{c} < \frac{1}{B} \qquad (6)$$

En remarquant que le premier terme de cette formule est égal à la distance P sur la figure 1, connue sous le nom de profondeur de l'antenne, cette formule s'écrit :

$$P < \frac{c}{B}.$$

La résolution en distance est donnée par $\frac{c}{2B}$, qui détermine la bande de fréquences à utiliser pour avoir la résolution voulue.

On constate donc que le secteur d'observation déterminé par la condition fondamentale obtenue ci-dessus, c'est-à-dire $\theta_o$ maximum, est d'autant plus étroit que la résolution en distance est importante.

Il est connu, pour augmenter ce secteur d'observation, d'utiliser une technique dite "retard + déphasage" dans laquelle on divise le secteur d'observation en n sous-secteurs où l'on peut respecter la condition fondamentale. Pour obtenir ces n sous-secteurs, on oriente l'antenne de manière électronique vers le centre de chacun de ces sous-secteurs en appliquant aux signaux des hydrophones des retards déterminés. A l'intérieur de chacun de ces sous-secteurs on utilise ensuite la technique des déphasages comme vu ci-dessus pour obtenir des voies adéquates.

Lorsque cette opération s'effectue en numérique, ce qui tend à devenir le cas général, on échantillonne puis on numérise les signaux de chacun des hydrophones, ce qui amène à transmettre vers les circuits de traitement um nombre considérable de données numériques.

Dans le cas d'un sonar remorqué on diminue le plus possible le poids et le volume des parties remorquées en limitant celles-ci à l'antenne et à un nombre minimum de circuits de traitement, soit le plus souvent aux échantillonneurs et aux convertisseurs analogiques-numériques. Les signaux ainsi obtenus sont transmis, le plus souvent en série, par des connexions incluses dans le câble de traction du véhicule remorqué, dit "poisson", qui contient l'antenne et lesdits circuits. Il est alors très difficile de transmettre tous ces signaux par ces connexions, notamment par des connexions de type coaxiaux dont le débit est limité à quelques dizaines de Mbits par secondes.

Pour diminuer le volume des signaux ainsi transmis entre le poisson et le bateau de remorquage, l'invention propose un procédé selon la revendication 1.

D'autres particularités et avantages de l'invention apparaîtront clairement dans la description suivante présentée à titre d'exemple non limitatif en regard des figures annexées qui représentent :

- la figure 1, le schéma d'une antenne de réception ;
- la figure 2, le synoptique d'un sonar selon l'invention ;
- la figure 3, un diagramme d'échantillonnage des signaux ;
- la figure 4, le schéma d'un secteur d'observation ; et
- la figure 5, un diagramme de répartition de voies.

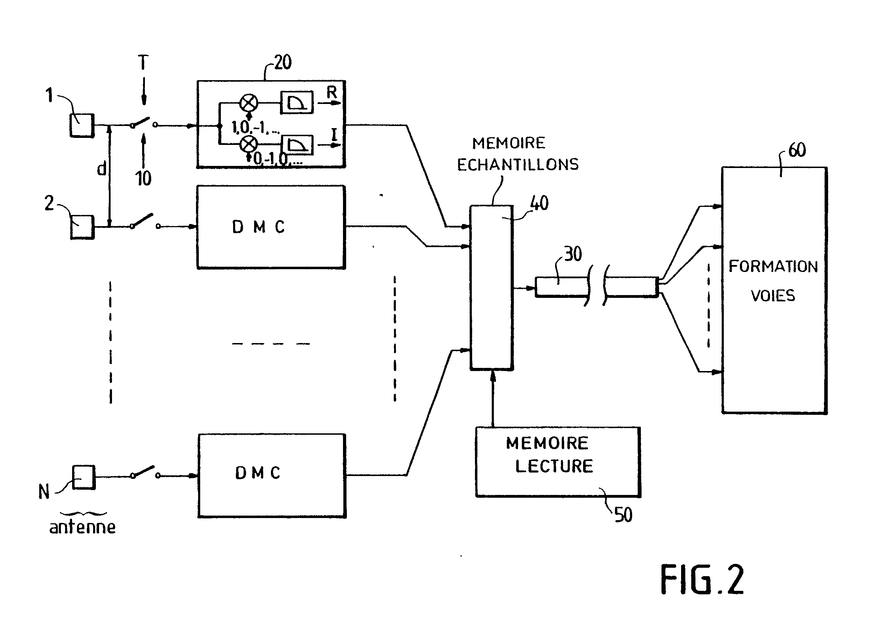

Comme représenté sur la figure 2, les signaux provenant des capteurs 1 à N sont échantillonnés par des échantillonneurs représentés schématiquement sur la figure par des interrupteurs 10, avec une période T = 1/4fo. Ces signaux sont ramenés en bande de base dans un ensemble de circuits de traitement tels que 20, connus sous le nom de démodulateur complexe numérique DMC. Cette démodulation complexe consiste à multiplier les signaux par sin(2πfo t) et cos(2πfo t) puis à les filtrer dans des filtres passe-bas de manière à obtenir les composantes réelle R et imaginaire I du signal. En effectuant cette opération de manière numérique et en choisissant justement la période d'échantillonnage à la valeur T, les sinus et cosinus prennent aux instants d'échantillonage les valeurs 1, 0 et -1, ce qui simplifie l'opération de multiplication. Celle-ci se réduit à laisser passer le signal (multiplier par 1), ne pas le laisser passer (multiplier par 0), ou l'inverser (multiplier par -1).

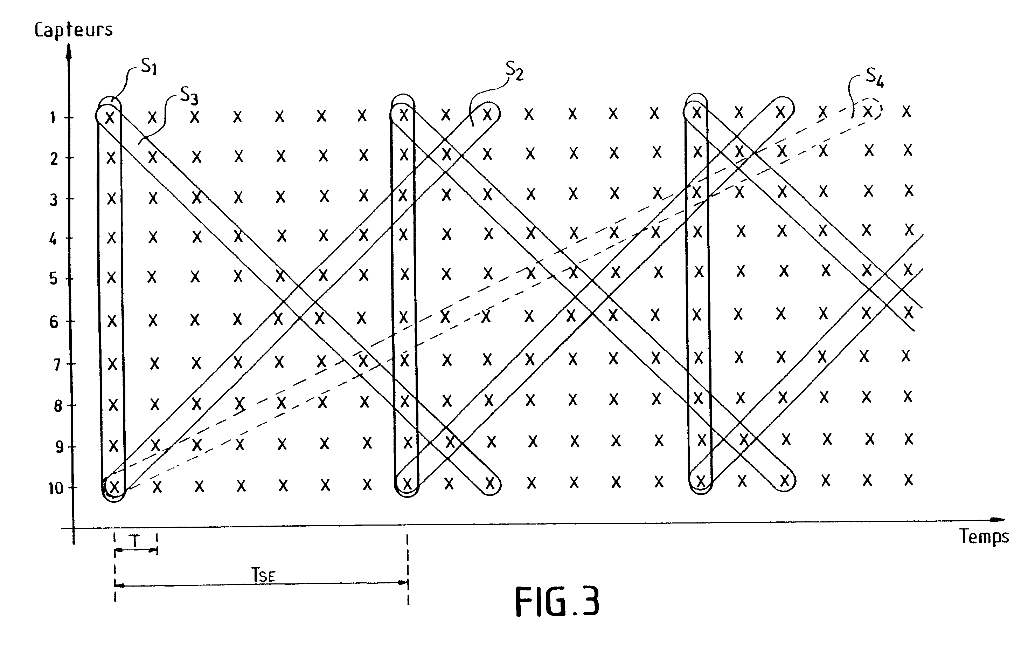

On obtient ainsi un ensemble d'échantillons numérisés des composantes réelles et imaginaires des signaux en bande de base provenant des hydrophones. On a représenté sur la figure 3 chaque paire d'échantillon (1 réel et 1 imaginaire) par une croix ayant pour abscisse l'instant d'échantillonnage et pour ordonnée le numéro du capteur.

La transmission de tous ces échantillons, de surcroît en numérique, exigerait une ligne de transmission ayant un débit considérable qu'il est très difficile d'incorporer au câble de traction représenté sur la figure 2 sous la référence 30. Pour limiter le débit on diminue la fréquence d'échantillonnage en opérant un sous-échantillonnage sur les signaux des capteurs. Le spectre utile étant limité à B/2, on ramène la fréquence d'échantillonnage à une fréquence égale au moins à B (théorème de Shanon) et plutôt égale dans les applications pratiques à au moins 1,25 B, compte-tenu du fait que les filtres ne peuvent pas être infiniment raides. La période de sous-échantillonnage égale à $T_{SE}$ est choisie égale à k x T. Le paramètre k sera choisi de manière à respecter la condition vue ci-dessus, le plus souvent par excès puisque dans le cas général k, qui est un nombre entier, ne permet pas de retomber exactement sur la valeur de la fréquence d'échantillonnage déterminée comme on l'a vu, ce qui est sans importance.

En prenant donc tous les échantillons qui sont alignés sur une verticale correspondant à un instant t, on obtient les signaux permettant de former des voies dans un secteur frontal perpendiculaire à l'antenne S1 dont la largeur est limitée en raison du dépointage dû à la largeur de bande comme vu plus haut.

Pour pouvoir élargir le champ d'observation, on forme alors des secteurs latéraux S2 et S3 adjacents au secteur frontal S1, comme représenté sur la figure 3.

Pour cela on oriente électroniquement l'antenne pour la rendre perpendiculaire aux directions centrales $\theta_D$ et $-\theta_D$ de ces secteurs S2 et S3, en retardant les signaux arrivant sur les hydrophones. Selon l'invention ce retard est égal entre deux hydrophones à la valeur T de la période d'échantillonnage des signaux des hydrophones. Ainsi donc pour former la voie S2, comme représenté sur la figure 3, on utilise le signal du capteur 10 non retardé, le signal du capteur 9 retardé de T, le signal du capteur 8 retardé de 2T, etc, et le signal du capteur 1 retardé de 9T.

Symétriquement, pour former le secteur S3 on prendra le signal du capteur 1 non retardé, le signal du capteur 2 retardé de T, etc. jusqu'au signal du capteur 10 retardé de 9T.

Le retard T correspond au retard géométrique de la voie centrale des secteurs latéraux 2 et 3 et l'on a donc l'égalité :

$$T = (d/c) \sin\theta_D = 1/4fo \qquad (7)$$

Compte tenu de ce que la quantification des retards est déterminée par T, et donc finalement par la fréquence centrale de réception, et que la largeur maximale admissible pour chaque secteur est elle déterminée par la bande passante B, il est clair que le système ainsi obtenue ne sera pas optimal puisqu'il n'y a aucune raison pour que le dépointage des secteurs latéraux, déterminé par T, corresponde aux limites extrêmes admissibles pour les secteurs, détermines par B. Néanmoins dans la plupart des cas pratiques ces secteurs se recouvrent assez peu et il suffit de supprimer au niveau de la formation des voies dans les secteurs celles qui se recouvriraient. La perte d'efficacité du matériel de formation de voies est cependant très largement compensée par le gain sur les moyens qu'il faudrait mettre en oeuvre si l'on transmettait tous les échantillons.

Bien entendu on n'est pas limité à forme deux secteurs latéraux, et on peut former des secteurs plus éloignés en prenant par exemple des retards entre deux hydrophones égaux à 2T, ce qui forme un secteur tel que S4 sur la figure 3. Dans ce cas il faut que la période T soit plus petite que $1/4_{fO}$ pour respecter le théorème de SHANON.

Les échantillons ainsi sélectionnés sur la figure 3 sont alors mis en série puis transmis par le câble 30. Cette sélection et cette mise en série s'effectuent par des moyens tout à fait courants, qui comprennent par exemple une mémoire d'échantillons 40 qui est remplie à l'aide des échantillons provenant des DMC 20 et qui est ensuite lue séquentiellement sous la commande d'une mémoire de lecture 50 convenablement program mée de manière à ne transmettre sur le câble 30 que les échantillons nécessaires pour former les voies et dans un ordre convenue qui permettra de les retrouver à l'arrivée.

En comptant sur la figure 3 les échantillons à transmettre effectivement pendant la durée $T_{SE}$, on en trouve 22 en se limitant aux secteurs 1 à 3, alors que les DMC fournissent pendant cette même durée 70 échantillons. Le gain en débit, et donc en bande passante nécessaire dans le câble, est significatif.

A l'arrivée au bout du câble 30 les échantillons sont triés par des moyens non représentés mais utilisant des techniques tout à fait connues et semblables à ceux qui ont permis la mise en série à l'entrée du câble. Les échantillons correspondants aux trois secteurs étant ainsi séparés et mis en série sont appliqués à un dispositif de formation de voies 60 qui utilise par exemple des circuits de calcul de transformée de Fourier rapides connues sous le nom de FFT. On pourra consulter sur ce sujet la revue JASA 75(6) juin 1984 pp 1837-1847. Ces circuits délivrent pour les trois secteurs les voies souhaitées dans lesquelles on élimine celles qui sont redondantes.

Dans un exemple de réalisation on a formé les voies d'un sonar dont les caractéristiques sont les suivantes :

fo = 76 kHz
B = 7,5 kHz
N = 56
d = 17,3 mm

Le câble de transmission de ce sonar comprend un câble coaxial dont le débit ne peut pas dépasser 30 mégabits/seconde.

La condition fondamentale sur la profondeur d'antenne donne donc comme valeur pour l'angle maximal de dépointage 12°.

On découpe donc le secteur d'observation souhaité en trois secteurs, un secteur frontal large d'environ 20° et deux secteurs latéraux adjacents à ce secteur frontal eux mêmes larges d'environ 10°. Le secteur d'observation a donc une ouverture sensiblement égale à 40°.

Pour cela, suivant l'invention on choisit une fréquence de sous-échantillonnage égale à 9,5 kHz, qui correspond à un paramètre k égal à 32. Cette fréquence d'échantillonnage est donc sensiblement égale à 1,27 fois la bande passante du signal reçu.

En numérisant les échantillons sur 9 bits, on obtient alors un débit de 28,73 mégabits par seconde, qui est donc inférieur à la limite de 30 mégabits par seconde présentée par le câble de transmission.

Compte tenu de la fréquence centrale de réception, le dépointage $\theta_D$ des voies centrales des secteurs latéraux, obtenu avec la formule (7), est égal à 16,57°.

Pour la réception au bout du câble on effectue la formation de voies dans les organes de traitement contenus dans le bâtiment tracteur à l'aide de trois dispositifs de FFT fonctionnant sur 64 points. Ce chiffre correspond à des circuits disponibles couramment dans le commerce et on sait les utiliser à partir de 56 échantillons délivrés par les hydrophones en complétant à 64 par des zéros.

Sur les trois fois 64 voies ainsi obtenues, on en garde 43 qui couvrent un secteur total de 43,83° selon la répartition représentée en figure 5, que l'on a limitée à la moitié du secteur frontal S1 et au secteur latéral S2, l'autre moitié de S1 et S3 étant symétriques par rapport à la voie centrale 0°.

Dans le secteur S1, on garde 21 voies s'étendant de 10,27° à bâbord à 10,27° à tribord en passant pas une voie centrale à 0°. La largeur angulaire de la voie 0° à 3dB d'atténuation, obtenue pour une pondération de type Chebyshev à -30dB, est $2\theta_3 = 1,28°$.

Dans le secteur S2, on garde 11 voies s'étendant de 11,23° à 21,91° autour d'un voie centrale située à 16,57°. La largeur angulaire de cette voie

centrale est $2\theta_3 = 1,34°$.

L'écart entre les voies extrêmes adjacentes des secteurs S1 et S2 est égal à 0,96°.

Au total on obtient un recouvrement entre voies meilleur que -3dB.

Le système ainsi décrit permet donc d'obtenir une couverture correcte du secteur d'observation avec un débit minimum dans le câble de remorquage et sans nécessiter d'interpolation entre les signaux à la réception, puisque tous les échantillons nécessaires pour former les voies ont été transmis, ce qui n'est pas le cas dans d'autres systèmes connus.

A titre de variante on peut effectuer la démodulation des signaux des capteurs de manière analogique et effectuer ensuite un échantillonnage sur les composantes réelles et imaginaires ainsi obtenues en utilisant une horloge dont les fronts de montée sont décalés pour obtenir les instants d'échantillonnage corrects.

**Revendications**

1. Procédé de formation de voies pour sonar, notamment pour sonar remorqué, dans lequel on divise le secteur d'observation du sonar en 1 secteur central et en plusieurs secteurs distincts adjacents à ce secteur central obtenus en retardant les signaux de réception des hydrophones formant l'antenne du sonar et on forme dans chaque secteur un ensemble de voies en déphasant les signaux ainsi retardés, caractérisé en ce qu'il comprend les étapes suivantes :
- échantillonnage (10) des signaux des hydrophones (1-N) avec une période T fonction de la fréquence centrale fo de réception du sonar et égale au retard entre 2 hydrophones consécutifs, ce retard correspondant aux 2 secteurs adjacents au secteur central,
- transposition en bande de base (20) des signaux ainsi échantillonnés ;
- sous-échantillonnage (40, 50) des signaux ainsi transposés avec une période $T_{SE} = kT$ (k nombre entier) fonction de la bande de fréquence B de réception du sonar et sélection de l'ensemble des N signaux de même rang déterminant le secteur central (S1) et des ensembles de signaux (<N) décalés entre eux d'un retard multiple de T déterminant les secteurs adjacents (S2-S3) ;
- transmission en série (30) des signaux sous-échantillonnés ;
- séparation des signaux transmis correspondant à chaque secteur ; et
- formation (60) dans chaque secteur d'un ensemble de voies couvrant ce secteur.

2. Procédé selon la revendication 1, caractérisé en ce que $T = 1/4fo$, la transposition étant effectuée selon la technique de démodulation complexe numérique (DMC), et que $T_{SE}$ est sensiblement égale à 1,25 B.

3. Procédé selon l'une quelconque des revendications 1 et 2, caractérisé en ce que l'on forme (60) les voies de chaque secteur en utilisant un dispositif (60) mettant en oeuvre une transformée de Fourier rapide (FFT).

4. Procédé selon la revendication 3, caractérisé en ce que le dispositif de transformée de Fourier forme un nombre de voies qui déborde les limites du secteur considéré et que l'on élimine les voies extrêmes qui retombent dans les secteurs adjacents.

FIG.1

P

d i

θ

L

N

1

θ

FIG.4

0 $S_1$

$-\theta_D$ $\theta_D$

$S_3$ $S_2$

voie 0°
centrale → 1,02°
 2,04°
 3,07°
 4,09°
 5,11°
 6,13°
 7,17°
 8,2°
 9,23°
 10,27°

½ $S_1$

11,23 (-5,34°)
 12,3 (-4,27°)
 13,37 (-3,2°)
 14,44 (-2,13°)
 15,51 (-1,06°)
 16,57° (0°)
voie centrale → 17,63°
 18,7°
 19,77°
 20,84°
 21,91°

$S_2$

FIG.5

FIG.2

EP 0 418 141 A1

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 109 869 (THOMSON-CSF)<br>* Le document en entier *<br>--- | 1 | G 10 K 11/34<br>G 01 S 7/00<br>G 01 V 1/22 |
| Y | US-A-4 041 442 (MARQUARDT)<br>* Le document en entier *<br>--- | 1 | |
| A | EP-A-0 072 287 (THOMSON-CSF)<br>* Abrégé; figures 1-10 *<br>--- | 1 | |
| A | GB-A-2 192 061 (PLESSEY CY)<br>* Abrégé; figure 1 *<br>----- | 1 | |

DOMAINES TECHNIQUES
RECHERCHES (Int. Cl.5)

G 10 K
G 01 V
G 01 S

Le présent rapport a été établi pour toutes les revendications

| Lieu de la recherche | Date d'achèvement de la recherche | Examinateur |
|---|---|---|
| LA HAYE | 17-12-1990 | BLONDEL F.J.M.L.J. |